# FASCICULE DE BREVET EUROPEEN

(11) **EP 3 312 689 B1**
(45) Date de publication et mention de la délivrance du brevet: **03.02.2021**
(21) Numéro de dépôt: 17196774.8
(22) Date de dépôt: 17.10.2017
(51) Int. Cl.: G05B 19/042, E06B 9/68, G05B 15/02

(54) **PROCÉDÉ DE COMMANDE EN FONCTIONNEMENT D'UNE INSTALLATION DOMOTIQUE ET INSTALLATION DOMOTIQUE ASSOCIÉE**
VERFAHREN ZUR BETRIEBSSTEUERUNG EINER DOMOTIK-ANLAGE, UND ENTSPRECHENDE DOMOTIK-ANLAGE
METHOD FOR CONTROLLING THE OPERATION OF A HOME-AUTOMATION INSTALLATION AND ASSOCIATED HOME-AUTOMATION INSTALLATION

(30) Priorité: 18.10.2016 FR 1660098
(43) Date de publication de la demande: 25.04.2018
(73) Titulaire: SOMFY ACTIVITES SA, 74300 Cluses (FR)
(72) Inventeur: MUGNIER, Mickaël, 74130 BONNEVILLE (FR); LEPAGE, Sébastien, 74130 BONNEVILLE (FR)
(74) Mandataire: Novaimo

(56) Documents cités:
- EP-A2- 1 970 521
- WO-A2-2014/060890
- FR-A1- 3 026 857
- US-A1- 2010 277 270

## Description

La présente invention concerne un procédé de commande en fonctionnement d'une installation domotique.

La présente invention concerne également une installation domotique adaptée à mettre en œuvre ce procédé de commande.

La présente invention concerne, plus particulièrement, le domaine des dispositifs d'occultation comprenant un dispositif d'entraînement motorisé mettant en mouvement un écran, entre au moins une première position et au moins une deuxième position.

Un dispositif d'entraînement motorisé d'une installation domotique comprend un actionneur électromécanique d'un élément mobile de fermeture, d'occultation ou de protection solaire, tel qu'un volet, une porte, une grille, un store ou tout autre matériel équivalent, appelé par la suite écran.

On connaît déjà le document EP 1 970 521 A2 qui décrit une installation domotique comprenant un actionneur et un point de commande. L'actionneur comprend une unité électronique de contrôle. Le point de commande comprend un contrôleur et un module d'émission d'ordres de commande. L'actionneur est commandé par le point de commande au moyen d'une communication sans fil. L'actionneur peut être basculé entre un mode de commande et un mode de configuration.

Pour placer l'actionneur dans le mode de configuration, un ou plusieurs éléments d'activation du point de commande sont activés suivant une séquence prédéterminée. La séquence prédéterminée est mise en œuvre soit au moyen d'éléments d'activation de commande de l'actionneur soit au moyen d'un élément d'activation dédié à la configuration.

Cependant, le point de commande d'une telle installation domotique présente l'inconvénient de comprendre une pluralité d'éléments d'activation.

Par conséquent, un tel point de commande présente un encombrement important.

En outre, le coût d'obtention du point de commande est élevé en raison de la pluralité d'éléments d'activation et des composants électroniques associés qui sont reliés électriquement au contrôleur du point de commande.

On connaît également le document FR 3 026 857 A1 qui décrit un procédé de commande en fonctionnement d'une installation domotique. L'installation domotique comprend un actionneur et un point de commande. Le point de commande comprend un contrôleur et un module d'émission d'ordres de commande. L'actionneur peut être commandé par le point de commande au moyen d'une communication sans fil. Le point de commande comprend un mode de commande et un mode de configuration. Le point de commande comprend une pluralité d'éléments d'activation. Des éléments d'activation de commande sont configurés pour contrôler le fonctionnement de l'actionneur, tels que des mouvements de montée ou de descente ou encore un arrêt, dans le mode de commande. En outre, un élément d'activation de programmation est configuré pour confirmer une fonction de programmation, dans le mode de configuration. A partir du mode de commande, le procédé est prévu pour entrer dans le mode de configuration en réponse à un événement initiateur prédéterminé. L'événement initiateur prédéterminé est indépendant des signaux de saisie au travers des éléments d'activation du point de commande. Suite à l'entrée dans le mode de configuration, le procédé est prévu pour activer l'élément d'activation de programmation du point de commande pendant une période de temps. Dans le cas où la période de temps d'activation de l'élément d'activation de programmation du point de commande est inférieure à une valeur seuil, le procédé comprend une étape de configuration d'un mode d'appairage du point de commande avec l'actionneur.

On connaît également le document WO 2014/060890 A2 qui décrit un procédé de commande en fonctionnement d'une installation domotique. L'installation domotique comprend un actionneur et un point de commande. L'actionneur comprend une unité électronique de contrôle. Le point de commande comprend un contrôleur et un module d'émission d'ordres de commande. L'actionneur est commandé par le point de commande au moyen d'une communication sans fil. Le point de commande comprend un ou plusieurs éléments d'activation. Le procédé comprend une étape d'activation d'un élément d'activation du point de commande pendant une première période de temps. Suite à l'étape d'activation, le procédé comprend une étape d'émission d'un ordre de commande à partir du point de commande vers l'actionneur et une étape de relâchement de l'élément d'activation du point de commande.

On connaît également le document US 2010/0277270 A1 qui décrit un procédé de commande en fonctionnement d'une installation domotique. L'installation domotique comprend un actionneur et un point de commande. L'actionneur comprend une unité électronique de contrôle. L'actionneur est commandé par le point de commande au moyen d'une communication sans fil. Le point de commande comprend des éléments d'activation. A partir du mode de commande, le procédé comprend une première étape d'activation d'un élément d'activation du point de commande pendant une première période de temps. Dans le cas où la première période de temps d'activation de l'un des éléments d'activation du point de commande est supérieure ou égale à une première valeur seuil, le procédé comprend une étape d'entrée dans le mode de configuration. Suite à l'entrée dans le mode de configuration, le procédé est prévu pour permettre l'activation de l'un des éléments d'activation du point de commande pendant une deuxième période de temps, pour entrer dans un mode de configuration d'un paramètre de réglage sélectionné préalablement. Le paramètre de réglage correspond à la sélection du type de dispositif de commande d'une lampe, c'est-à-dire avec ou sans variation de lumière. En outre, ce document décrit que le procédé comprend une sous-routine de configuration pour mettre en œuvre une étape d'appairage d'un point de commande avec un contrôleur d'un actionneur. L'étape d'appairage est mise en œuvre en réalisant une séquence d'activations de plusieurs éléments d'activation suivant une séquence prédéterminée. Cette sous-routine de configuration est mise en œuvre préalablement à l'étape de passage du mode de commande au mode de configuration.

La présente invention a pour but de résoudre les inconvénients précités et de proposer un procédé de commande en fonctionnement d'une installation domotique, ainsi qu'une installation domotique, permettant de basculer entre un mode de commande et un mode de configuration d'un point commande au moyen d'un unique élément d'activation du point de commande, puis de créer ou de supprimer un appairage entre le point de commande et un actionneur au moyen du point de commande.

A cet effet, la présente invention vise, selon un premier aspect, un procédé de commande en fonctionnement d'une installation domotique, ladite installation domotique comprenant au moins :
∘ un dispositif d'occultation, le dispositif d'occultation comprenant un écran,
∘ un actionneur, l'actionneur comprenant une unité électronique de contrôle,
∘ un point de commande, le point de commande comprenant un contrôleur et un module d'émission d'ordres de commande,
   ▪ l'actionneur étant commandé par le point de commande au moyen d'une communication sans fil.

Le point de commande comprend au moins un mode de commande et un mode de configuration.

Le point de commande comprend un unique élément d'activation.

Selon l'invention, le procédé comprend au moins les étapes suivantes, à partir du mode de commande :
- une première étape d'activation de l'unique élément d'activation du point de commande pendant une première période de temps, engendrant un déplacement de l'écran,
- suite à la première étape d'activation,
   ∘ une étape d'émission d'un ordre de commande à partir du point de commande vers l'actionneur, puis
   ∘ une première étape de relâchement de l'unique élément d'activation du point de commande.

Le procédé comprend au moins les étapes suivantes en fonction de la première période de temps d'activation de l'unique élément d'activation du point de commande, à la première étape d'activation :
- suite à la première étape de relâchement et dans le cas où la première période de temps d'activation de l'unique élément d'activation du point de commande est supérieure ou égale à une première valeur seuil et inférieure à une deuxième valeur seuil, la deuxième valeur seuil étant supérieure à la première valeur seuil, une étape d'entrée dans le mode de configuration, et
- dans le cas où la première période de temps d'activation de l'unique élément d'activation du point de commande est supérieure ou égale à la deuxième valeur seuil, une étape de maintien dans le mode de commande.

En outre, le procédé comprend au moins les étapes suivantes :
- une étape d'arrêt de l'émission d'un ordre de commande à partir du point de commande vers l'actionneur, dès que la première période de temps d'activation de l'unique élément d'activation du point de commande, à la première étape d'activation, est supérieure ou égale à la deuxième valeur seuil,
- suite à l'étape d'entrée dans le mode de configuration, une deuxième étape d'activation de l'unique élément d'activation du point de commande pendant une deuxième période de temps,
- dans le cas où la deuxième période de temps d'activation de l'unique élément d'activation du point de commande est inférieure à une troisième valeur seuil, une étape de création ou de suppression d'un appairage du point de commande avec l'actionneur,
- dans le cas où la deuxième période de temps d'activation de l'unique élément d'activation du point de commande est supérieure à une quatrième valeur seuil, le procédé comprend une étape d'entrée dans le mode de commande.

Ainsi, l'entrée dans le mode de configuration du point de commande est mise en œuvre par un seul appui sur l'unique élément d'activation maintenu pendant la première période de temps qui est comprise entre la première valeur seuil et la deuxième valeur seuil. Puis, la création ou la suppression de l'appairage du point de commande avec l'actionneur est mise en œuvre par un seul appui sur l'unique élément d'activation maintenu pendant la deuxième période de temps qui est inférieure à la troisième valeur seuil.

De cette manière, le point de commande comprend un unique élément d'activationpermettant de basculer entre le mode de commande et le mode de configuration, ainsi que de créer ou de supprimer l'appairage entre le point de commande et l'actionneur, de sorte à limiter l'encombrement du point de commande et à minimiser les coûts d'obtention du point de commande.

En outre, l'unique élément d'activation du point de commande permet de commander l'actionneur dans le mode de commande.

Par ailleurs, l'emploi de l'unique élément d'activation permet de garantir la fiabilité de fonctionnement du point de commande.

Selon une caractéristique avantageuse de l'invention, suite à la première étape d'activation de l'unique élément d'activation du point de commande et dans le cas où la première période de temps est supérieure ou égale à la première valeur seuil, le procédé comprend une étape de signalement d'un basculement du mode de commande au mode de configuration.

Selon une autre caractéristique avantageuse de l'invention, le procédé comprend une étape d'arrêt de signalement d'un basculement du mode de commande au mode de configuration, dès que la première période de temps d'activation de l'unique élément d'activation du point de commande, à la première étape d'activation, est supérieure ou égale à la deuxième valeur seuil.

Selon une autre caractéristique avantageuse de l'invention, l'étape de signalement est maintenue active tant que le point de commande est dans le mode de configuration.

Selon une autre caractéristique avantageuse de l'invention, suite à la deuxième étape d'activation, le procédé comprend une deuxième étape de relâchement de l'unique élément d'activation du point de commande, puis une étape d'entrée dans le mode de commande.

Selon une autre caractéristique avantageuse de l'invention, suite à l'étape d'entrée dans le mode de configuration et dans le cas où la deuxième étape d'activation de l'unique élément d'activation du point de commande est non détectée par le contrôleur du point de commande, pendant une troisième période de temps supérieure ou égale à une cinquième valeur seuil, le procédé comprend une étape d'entrée dans le mode de commande.

Selon une autre caractéristique avantageuse de l'invention, le procédé comprend une étape d'arrêt de signalement du mode de configuration, dès que la troisième période de temps est supérieure ou égale à la cinquième valeur seuil.

Selon une autre caractéristique avantageuse de l'invention, le procédé comprend une étape d'insertion d'une pile dans un logement d'un boîtier du point de commande, puis une étape d'entrée dans le mode de commande.

La présente invention vise, selon un deuxième aspect, une installation domotique comprenant au moins :
∘ un actionneur, l'actionneur comprenant une unité électronique de contrôle,
∘ un point de commande, le point de commande comprenant un unique élément d'activation, un contrôleur et un module d'émission d'ordres de commande,
   ▪ l'actionneur étant commandé par le point de commande au moyen d'une communication sans fil.

Le contrôleur du point de commande est configuré pour mettre en œuvre le procédé selon l'invention.

Autrement dit, le contrôleur du point de commande comprend des moyens pour mettre en œuvre le procédé selon l'invention, notamment pour mettre en œuvre des étapes du procédé selon l'invention.

Cette installation domotique présente des caractéristiques et avantages analogues à ceux décrits précédemment en relation avec le procédé de commande selon l'invention.

L'invention porte encore sur un support d'enregistrement lisible par ordinateur comprenant des instructions qui, lorsqu'elles sont exécutées par un ordinateur, conduisent celui-ci à mettre en œuvre le procédé défini précédemment, notamment à mettre en œuvre des étapes du procédé défini précédemment.

L'invention porte encore sur un produit programme comprenant des instructions qui, lorsque le programme est exécuté par un ordinateur, conduisent celui-ci à mettre en œuvre le procédé défini précédemment, notamment à mettre en œuvre des étapes du procédé défini précédemment.

D'autres particularités et avantages de l'invention apparaîtront encore dans la description ci-après.

Aux dessins annexés, donnés à titre d'exemples non limitatifs :
- la figure 1 est une vue schématique en coupe transversale d'une installation domotique conforme à un mode de réalisation de l'invention ;
- la figure 2 est une vue schématique en perspective de l'installation domotique illustrée à la figure 1 ;
- la figure 3 est une vue schématique en coupe partielle de l'installation domotique illustrée à la figure 2 comprenant un actionneur électromécanique conforme à un mode de réalisation de l'invention ; et
- la figure 4 est un schéma blocs d'un algorithme d'un procédé conforme à l'invention, de commande en fonctionnement de l'installation domotique illustrée aux figures 1 à 3.

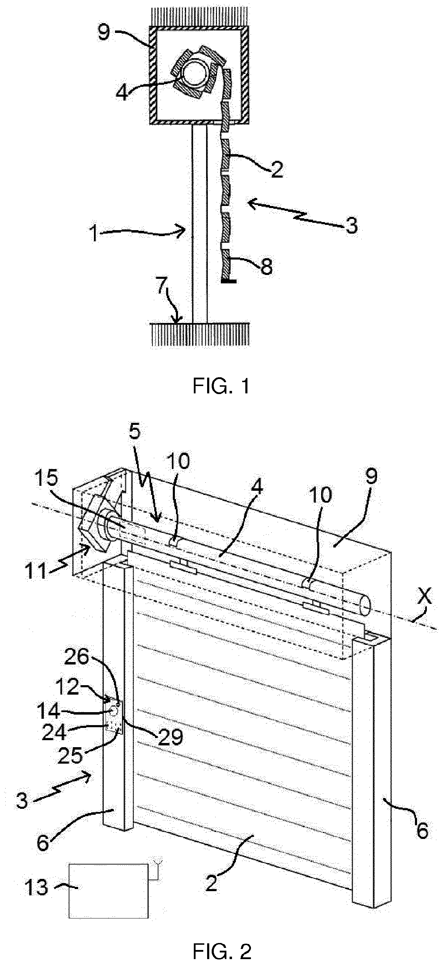

On décrit tout d'abord, en référence aux figures 1 et 2, un mode de réalisation d'une installation domotique de fermeture ou de protection solaire conforme à l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, un store en toile ou avec des lames orientables, notamment un store de terrasse ou un store vénitien, un portail ou une porte de garage. La présente invention s'applique à tous les types de dispositif d'occultation.

On décrit, en référence aux figures 1 et 2, un volet roulant conforme à un mode de réalisation de l'invention.

L'écran 2 du dispositif d'occultation 3 est enroulé sur un tube d'enroulement 4 entraîné par un dispositif d'entraînement motorisé 5 et mobile entre une position enroulée, en particulier haute, et une position déroulée, en particulier basse.

L'écran 2 mobile du dispositif d'occultation 3 est un écran de fermeture, d'occultation et/ou de protection solaire, s'enroulant sur le tube d'enroulement 4 dont le diamètre intérieur est sensiblement supérieur au diamètre externe d'un actionneur électromécanique 11, de sorte que l'actionneur électromécanique 11 puisse être inséré dans le tube d'enroulement 4, lors de l'assemblage du dispositif d'occultation 3.

Le dispositif d'entraînement motorisé 5 comprend l'actionneur électromécanique 11, en particulier de type tubulaire, permettant de mettre en rotation le tube d'enroulement 4, de sorte à dérouler ou enrouler l'écran 2 du dispositif d'occultation 3.

Le dispositif d'occultation 3 comprend le tube d'enroulement 4 pour enrouler l'écran 2, où, dans l'état monté, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux glissières latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8 en forme de L du tablier 2 du volet roulant 3 contre un bord d'un coffre 9 du volet roulant 3, et la position basse déroulée correspond à la mise en appui de la lame d'extrémité finale 8 du tablier 2 du volet roulant 3 contre un seuil 7 de l'ouverture 1.

La première lame du volet roulant 3, opposée à la lame d'extrémité, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Le dispositif d'entraînement motorisé 5 est commandé par une unité de commande. L'unité de commande peut être, par exemple, une unité de commande locale 12, où l'unité de commande locale 12 peut être reliée en liaison filaire ou non filaire avec une unité de commande centrale 13. L'unité de commande centrale 13 pilote l'unité de commande locale 12, ainsi que d'autres unités de commande locales similaires et réparties dans le bâtiment.

L'unité de commande centrale 13 peut être en communication avec une station météorologique déportée à l'extérieur du bâtiment, incluant, notamment, un ou plusieurs capteurs pouvant être configurés pour déterminer, par exemple, une température, une luminosité, ou encore une vitesse de vent.

Un point de commande 12, en particulier mural, peut être un type d'unité de commande locale. Le point de commande 12 comprend un élément d'activation 14 et, éventuellement, un élément d'affichage 26, de sorte à permettre à un utilisateur d'intervenir sur l'actionneur électromécanique 11 et/ou l'unité de commande centrale 13.

L'actionneur électromécanique 11 est commandé par le point de commande 12 au moyen d'une communication sans fil.

L'actionneur électromécanique 11 est, de préférence, configuré pour exécuter les commandes de déroulement ou d'enroulement de l'écran 2 du dispositif d'occultation 3 pouvant être émises, notamment, par le point de commande 12.

Le point de commande 12 comprend également un contrôleur 24 et un module d'émission d'ordres de commande 25.

Le module d'émission d'ordres de commande 25 du point de commande 12 peut ainsi permettre l'émission d'ordres par des moyens sans fil. En particulier, le module d'émission d'ordres de commande 25 du point de commande 12 est configuré pour émettre des ordres de commande radioélectriques.

Le point de commande 12 peut également comprendre un module de réception d'ordres de commande, non représenté.

Dans un exemple de réalisation, le module d'émission d'ordres de commande 25 et le module réception d'ordres de commande sont compris dans un même module.

En variante, le module d'émission d'ordres de commande 25 et le module réception d'ordres de commande sont compris dans deux modules distincts.

Avantageusement, le point de commande 12 comprend des éléments de fixation, non représentés, en particulier par encliquetage élastique.

Dans un exemple de réalisation, non représenté, le point de commande 12 est installé sur un montant d'une fenêtre de l'installation domotique. L'assemblage du point de commande 12 sur le montant est mis en œuvre au moyen des éléments de fixation configurés pour coopérer avec un trou ménagé dans le montant.

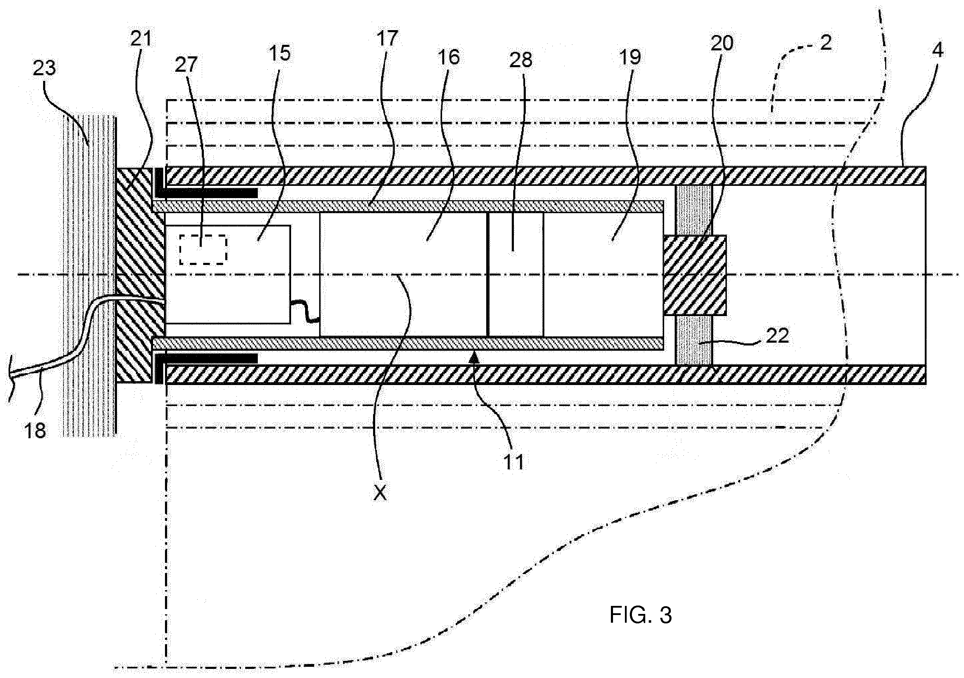

L'actionneur électromécanique 11 comprend un moteur électrique 16, tel qu'illustré à la figure 3. Le moteur électrique 16 comprend un rotor et un stator, non représentés et positionnés de manière coaxiale autour d'un axe de rotation X, qui est également l'axe de rotation du tube d'enroulement 4 en configuration montée du dispositif d'entraînement motorisé 5.

Des moyens de commande de l'actionneur électromécanique 11 conforme à l'invention, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 11, et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

L'unité électronique de contrôle 15 comprend également un module de réception d'ordres de commande 27, en particulier d'ordres électriques émis par un émetteur d'ordres, tel que le point de commande 12 destiné à commander l'actionneur électromécanique 11.

Le module de réception d'ordres de commande 27 de l'unité électronique de contrôle 15 peut ainsi permettre la réception d'ordres transmis par des moyens sans fil. En particulier, le module de réception d'ordres de commande 27 de l'unité électronique de contrôle 15 est configuré pour recevoir des ordres de commande radioélectriques.

Ici, et tel qu'illustré à la figure 3, l'unité électronique de contrôle 15 est disposée à l'intérieur d'un carter 17 de l'actionneur électromécanique 11.

Les moyens de commande de l'actionneur électromécanique 11 comprennent des moyens matériels et/ou logiciels.

A titre d'exemple nullement limitatif, les moyens matériels peuvent comprendre au moins un microcontrôleur intégré à l'unité électronique de contrôle 15.

On décrit à présent, plus en détail et en référence à la figure 3, l'actionneur électromécanique 11 appartenant à l'installation domotique des figures 1 et 2.

L'actionneur électromécanique 11 est alimenté en énergie électrique par un réseau d'alimentation électrique du secteur, ou encore au moyen d'une batterie, pouvant être rechargée, par exemple, par un panneau photovoltaïque. L'actionneur électromécanique 11 permet de déplacer l'écran 2 du dispositif d'occultation 3.

Ici, l'actionneur électromécanique 11 comprend un câble d'alimentation électrique 18 permettant son alimentation en énergie électrique depuis le réseau d'alimentation électrique du secteur.

Le carter 17 de l'actionneur électromécanique 11 est, préférentiellement, de forme cylindrique.

Dans un mode de réalisation, le carter 17 est réalisé dans un matériau métallique. La matière du carter de l'actionneur électromécanique n'est pas limitative et peut être différente. Il peut s'agir, en particulier, d'une matière plastique.

L'actionneur électromécanique 11 comprend également un dispositif de réduction à engrenages 19, un frein 28 et un arbre de sortie 20.

L'actionneur électromécanique 11 peut également comprendre un dispositif de détection de fin de course et/ou d'obstacle, non représenté, pouvant être mécanique et/ou électronique.

Avantageusement, le moteur électrique 16 et le dispositif de réduction à engrenages 19 sont disposés à l'intérieur du carter 17 de l'actionneur électromécanique 11.

L'arbre de sortie 20 de l'actionneur électromécanique 11 est disposé à l'intérieur du tube d'enroulement 4, et au moins en partie à l'extérieur du carter 17 de l'actionneur électromécanique 11.

L'arbre de sortie 20 de l'actionneur électromécanique 11 est accouplé par un élément de liaison 22 au tube d'enroulement 4, en particulier un élément de liaison en forme de roue.

L'actionneur électromécanique 11 comprend également un élément d'obturation 21 d'une extrémité du carter 17.

Ici, le carter 17 de l'actionneur électromécanique 11 est fixé à un support 23, en particulier une joue, du coffre 9 du dispositif d'occultation 3 au moyen de l'élément d'obturation 21 formant un support de couple, en particulier une tête d'obturation et de reprise de couple. Dans un tel cas où l'élément d'obturation 21 forme un support de couple, l'élément d'obturation 21 est également appelé un point fixe de l'actionneur électromécanique 11.

Dans l'exemple de réalisation illustré à la figure 3, l'unité électronique de contrôle 15 est disposée, autrement dit intégrée, à l'intérieur du carter 17 de l'actionneur électromécanique 11.

Dans un autre exemple de réalisation, l'unité électronique de contrôle 15 est disposée à l'extérieur du carter 17 de l'actionneur électromécanique 11 et, en particulier, montée sur le support 23 ou dans l'élément d'obturation 21.

Ici, le point de commande 12 est un point de commande fixe et, en particulier, un point de commande mural. Le point de commande 12 comprend un boîtier 29.

Ici, le point de commande 12 comprend un unique élément d'activation 14 et, en particulier une touche de commande.

L'élément d'activation 14 du point de commande 12 peut être un bouton ou une touche, notamment un bouton poussoir ou une touche capacitive.

Le type d'élément d'activation du point de commande n'est pas limitatif et peut être différent, en particulier une touche optoélectronique ou résistive.

L'élément d'activation 14 du point de commande 12 permet de commander le déplacement de l'écran 2 dans un premier sens de déplacement et dans un deuxième sens de déplacement.

Une activation de l'élément d'activation 14 du point de commande 12 correspond à un appui sur le bouton de commande 14 du point de commande 12, de sorte à faire basculer un commutateur entre une position ouverte et une position fermée.

Le point de commande 12 comprend au moins un mode de commande et un mode de configuration, de même que l'actionneur électromécanique 11.

Avantageusement, le contrôleur 24 du point de commande 12, ainsi que l'unité électronique de contrôle 15 de l'actionneur électromécanique 11, sont configurés pour basculer du mode de commande au mode de configuration, et inversement.

Dans le mode de commande, suite à une première activation de l'élément d'activation 14 du point de commande 12, l'actionneur électromécanique 11 est alimenté en énergie électrique et commandé dans un premier sens de rotation, par exemple l'écran 2 est remonté en direction de la position de fin de course haute. Puis, une deuxième activation de l'élément d'activation 14 du point de commande 12 permet d'arrêter le mouvement de l'écran 2. Suite à une troisième activation de l'élément d'activation 14 du point de commande 12, l'actionneur électromécanique 11 est alimenté en énergie électrique et commandé dans un deuxième sens de rotation, par exemple l'écran 2 est baissé en direction de la position de fin de course basse. Puis, une quatrième activation de l'élément d'activation 14 du point de commande 12 permet d'arrêter le mouvement de l'écran 2. Le deuxième sens de rotation de l'actionneur électromécanique 11 est opposé au premier sens de rotation de celui-ci.

Dans le cas où une cinquième activation de l'élément d'activation 14 du point de commande 12 est mise en œuvre, celle-ci est identique à la première activation de l'élément d'activation 14 du point de commande 12.

Ainsi, le point de commande 12 permet d'émettre des ordres de commande en fonction des appuis successifs sur l'élément d'activation 14 qui sont définis suivant une séquence prédéterminée. Les ordres de commande associés aux différentes activations de l'élément d'activation 14 du point de commande 12 sont répétés cycliquement suivant la séquence prédéterminée, qui correspond dans l'exemple à un ordre de montée, un ordre d'arrêt, un ordre de descente et un ordre d'arrêt.

De cette manière, le point de commande 12 présente un fonctionnement dit séquentiel, en particulier à quatre temps, où les ordres de commande sont répétés en boucle en fonction du nombre d'activations de l'élément d'activation 14 du point de commande 12.

L'installation domotique, en particulier le point de commande 12 et l'actionneur électromécanique 11, notamment le contrôleur 24 et l'unité électronique de contrôle 15, comprend des moyens matériels et/ou logiciels permettant de régir son fonctionnement conformément au procédé objet de l'invention. Les moyens logiciels, peuvent, notamment comprendre un code de programme informatique adapté à la réalisation des étapes du procédé selon l'invention, lorsque le programme tourne sur un ordinateur.

Dans un premier cas, le contrôleur 24 comprend un circuit de mesure de la durée d'activation de l'unique élément d'activation 14.

Dans le premier cas, le contrôleur 24 comprend un comparateur agencé, de sorte à comparer les durées d'activation de l'unique élément d'activation 14 à différents seuils.

Dans un deuxième cas, l'unité électronique de contrôle 15 comprend un circuit de mesure de la durée de réception d'un signal émis par le point de commande 12, du fait de l'activation de l'unique élément d'activation 14.

Dans le deuxième cas, l'unité électronique de contrôle 15 comprend un comparateur agencé, de sorte à comparer les durées de réception des signaux émis par le point de commande 12, du fait de l'activation de l'unique élément d'activation 14, à différents seuils.

Dans un autre cas, le contrôleur 24 comprend le circuit de mesure de la durée d'activation de l'unique élément d'activation 14 et l'unité électronique de contrôle 15 comprend le circuit de mesure de la durée de réception d'un signal émis par le point de commande 12.

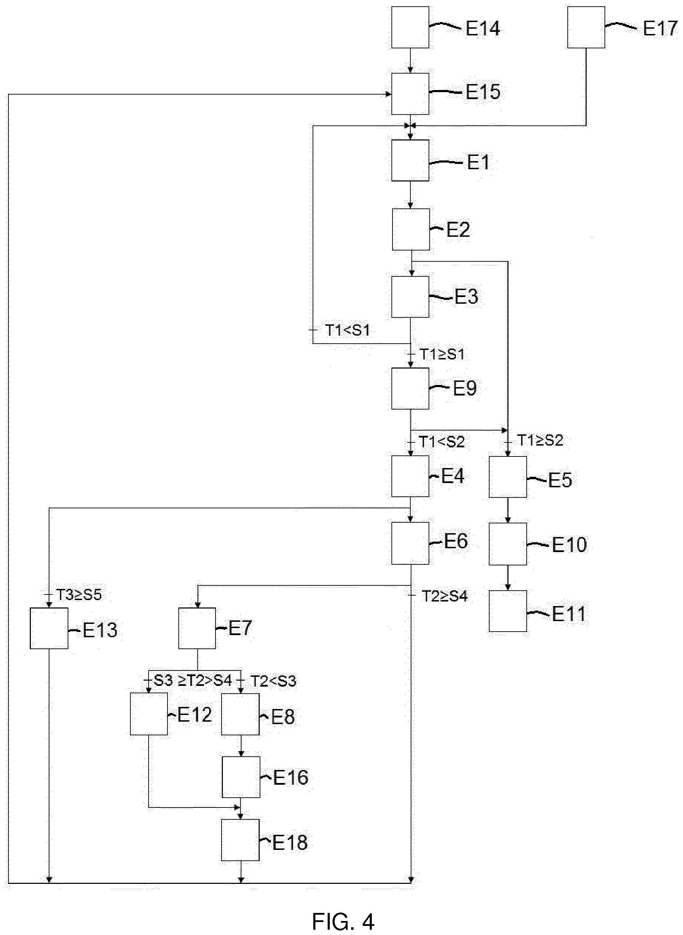

On décrit à présent, en référence à la figure 4, un mode d'exécution d'un procédé de commande en fonctionnement de l'installation domotique conforme à l'invention représentée aux figures 1 à 3.

Le procédé comprend une étape E14 d'insertion d'une pile, non représentée, dans un logement du boîtier 29 du point de commande 12, puis une étape E15 d'entrée dans le mode de commande du point de commande 12.

Ainsi, le point de commande 12 bascule d'un mode non alimenté en énergie électrique au mode de commande.

Avantageusement, l'étape E14 d'insertion de la pile est mise en œuvre lors de la mise en service du point de commande 12 ou lors du remplacement de la pile.

A partir du mode de commande, le procédé comprend une première étape E1 d'activation, en particulier par l'utilisateur, de l'unique élément d'activation 14 du point de commande 12 pendant une première période de temps T1.

La première période de temps T1 démarre à partir de l'instant de l'activation de l'élément d'activation 14 du point de commande 12, à la première étape E1 d'activation.

Ici, la première période de temps T1 d'activation de l'élément d'activation 14 du point de commande 12 est déterminée, notamment mesurée ou évaluée, par le contrôleur 24 du point de commande 12 et, en particulier, par un microcontrôleur du contrôleur 24 comprenant une horloge.

Suite à la première étape E1 d'activation, le procédé comprend une étape E2 d'émission d'un ordre de commande à partir du point de commande 12 vers l'actionneur électromécanique 11.

Ainsi, lors de l'activation de l'élément d'activation 14 du point de commande 12, à la première étape E1 d'activation, le point de commande 12 émet un ordre de commande à l'actionneur électromécanique 11 qui engendre un déplacement de l'écran 2, puisque le point de commande 12 est dans le mode de commande, de même que l'actionneur électromécanique 11.

Suite à la première étape E1 d'activation, le procédé comprend également une première étape E3 de relâchement de l'unique élément d'activation 14 du point de commande 12.

Ici et comme illustré à la figure 4, l'étape E2 d'émission d'un ordre de commande est mise en œuvre avant la première étape E3 de relâchement.

En fonction de la première période de temps T1 d'activation de l'unique élément d'activation 14 du point de commande 12 à la première étape E1 d'activation, le procédé comprend différentes étapes E4, E5.

Avantageusement, suite à la première étape E3 de relâchement et dans le cas où la première période de temps T1 d'activation de l'unique élément d'activation 14 du point de commande 12 est inférieure à une première valeur seuil S1, le procédé revient avant la première étape E1 d'activation.

Ainsi, dans le cas où la première période de temps T1 d'activation de l'unique élément d'activation 14 du point de commande 12 est inférieure à la première valeur seuil S1, le point de commande 12 est dans le mode de commande et émet un ordre de commande vers l'actionneur électromécanique 11.

A titre d'exemple nullement limitatif, la première valeur seuil S1 est de l'ordre de cinq secondes.

Suite à la première étape E3 de relâchement et dans le cas où la première période de temps T1 d'activation de l'unique élément d'activation 14 du point de commande 12 est supérieure ou égale à la première valeur seuil S1 et inférieure à une deuxième valeur seuil S2, le procédé comprend une étape E4 d'entrée dans le mode de configuration.

Avantageusement, l'entrée dans le mode de configuration est mise en œuvre par le basculement entre le mode de commande et le mode de configuration.

A titre d'exemple nullement limitatif, la deuxième valeur seuil S2 est de l'ordre de dix secondes.

En outre, dans le cas où la première période de temps T1 d'activation de l'unique élément d'activation 14 du point de commande 12 est supérieure ou égale à la deuxième valeur seuil S2, le procédé comprend une étape E5 de maintien dans le mode de commande.

En pratique, l'étape E5 de maintien dans le mode de commande est mise en œuvre lorsque la première période de temps T1 d'activation de l'élément d'activation 14 du point de commande 12 est supérieure ou égale à la deuxième valeur seuil S2 et indépendamment du relâchement ou non de l'élément d'activation 14 du point de commande 12, à la première étape E3 de relâchement.

Ainsi, l'absence de détection du signal de relâchement de l'élément d'activation 14 du point de commande 12 correspond à une erreur de manipulation du point de commande 12 ne devant pas être prise en considération pour basculer du mode de commande au mode de configuration.

Le procédé comprend une étape E11 d'arrêt de l'émission d'un ordre de commande à partir du point de commande 12 vers l'actionneur électromécanique 11, dès que la première période de temps T1 d'activation de l'unique élément d'activation 14 du point de commande 12, à la première étape E1 d'activation, est supérieure ou égale à la deuxième valeur seuil S2.

Ainsi, l'ordre de commande est émis, lors de l'étape E2, à partir du point de commande 12 vers l'actionneur électromécanique 11 dès la première activation de l'unique élément d'activation 14, lors de l'étape E1, jusqu'à ce que la première période T1 d'activation de l'unique élément d'activation 14 atteigne la deuxième valeur seuil S2.

L'unique élément d'activation 14 du point de commande 12 est donc maintenu activé lors de l'atteinte de la deuxième valeur seuil S2 et l'ordre de commande est arrêté, lors de l'étape E11, dès que la deuxième valeur seuil S2 est franchie.

De cette manière, l'ordre de commande est émis, lors de l'étape E2, par le point de commande 12 pendant toute la période de temps T1, où l'unique élément de sélection 14 est activé entre l'instant de la première activation de celui-ci, lors de l'étape E1, et l'instant de l'atteinte de la deuxième valeur seuil S2.

Par simplification, deux modes d'exécution sont représentés sur la même figure 4. Un premier mode d'exécution est représenté par une première branche, suite à l'étape E2, où l'on teste la durée d'activation T1 de l'unique élément d'activation 14 au cours de l'activation de ce dernier. Ici et comme illustré à la figure 4, la première branche correspond à la succession des étapes E2, E5, E10, E11. En outre, un deuxième mode d'exécution est représenté par une deuxième branche, suite à l'étape E2, où l'on teste la durée d'activation T1 de l'unique élément d'activation 14 après l'activation de ce dernier, c'est-à-dire après la première étape E3 de relâchement. Ici et comme illustré à la figure 4, la deuxième branche correspond à la succession des étapes E2, E3, E9, E5, E10, E11.

L'étape E11 d'arrêt de l'émission d'un ordre de commande peut être mise en œuvre en parallèle, avant ou après l'étape E5 de maintien dans le mode de commande.

Préférentiellement, le contrôleur 24 du point de commande 12 est configuré pour détecter une activation de l'élément d'activation 14 du point de commande 12 et pour mesurer une période de temps d'activation de l'élément d'activation 14 du point de commande 12.

Suite à l'étape E4 d'entrée dans le mode de configuration, le procédé comprend une deuxième étape E6 d'activation, en particulier par l'utilisateur, de l'unique élément d'activation 14 du point de commande 12 pendant une deuxième période de temps T2.

Ici, la deuxième période de temps T2 d'activation de l'élément d'activation 14 du point de commande 12 est déterminée, notamment mesurée ou évaluée, par le contrôleur 24 du point de commande 12 et, en particulier, par un microcontrôleur du contrôleur 24 comprenant une horloge.

La deuxième période de temps T2 démarre à partir de l'instant de l'activation de l'élément d'activation 14 du point de commande 12, à la deuxième étape E6 d'activation.

En fonction de la deuxième période de temps T2 d'activation de l'unique élément d'activation 14 du point de commande 12 à la deuxième étape E6 d'activation, le procédé comprend différentes étapes E8, E12, E15.

Dans le cas où la deuxième période de temps T2 d'activation de l'unique élément d'activation 14 du point de commande 12 est inférieure à une troisième valeur seuil S3, le procédé comprend une étape E8 de création ou de suppression d'un appairage du point de commande 12 avec l'actionneur électromécanique 11.

A titre d'exemple nullement limitatif, la troisième valeur seuil S3 est de l'ordre de deux secondes.

Ainsi, l'entrée dans le mode de configuration du point de commande 12 est mise en œuvre par un seul appui sur l'unique élément d'activation 14 maintenu pendant la première période de temps T1 qui est comprise entre la première valeur seuil S1 et la deuxième valeur seuil S2. Puis, la création ou la suppression de l'appairage du point de commande 12 avec l'actionneur électromécanique 11 est mise en œuvre par un seul appui sur l'unique élément d'activation 14 maintenu pendant la deuxième période de temps T2 qui est inférieure à la troisième valeur seuil S3.

De cette manière, le point de commande 12 comprend un unique élément d'activation 14 permettant de basculer entre le mode de commande et le mode de configuration, ainsi que de créer ou de supprimer l'appairage entre le point de commande 12 et l'actionneur électromécanique 11, de sorte à limiter l'encombrement du point de commande 12 et à minimiser les coûts d'obtention du point de commande 12.

Préférentiellement, l'étape E8 de création ou de suppression de l'appairage du point de commande 12 avec l'actionneur électromécanique 11 est mise en œuvre par l'émission d'une trame à partir du point de commande 12, en particulier du module d'émission d'ordres de commande 25, vers l'unité électronique de contrôle 15 de l'actionneur électromécanique 11, en particulier le module de réception d'ordres 27 de l'unité électronique de contrôle 15.

En pratique, suite à l'étape E8 de création ou de suppression de l'appairage du point de commande 12 avec l'actionneur électromécanique 11, le procédé comprend une étape E16 de mémorisation.

Ainsi, un identifiant d'appairage entre le point de commande 12 et l'actionneur électromécanique 11 est enregistré ou effacé d'une mémoire de l'unité électronique de contrôle 15 de l'actionneur électromécanique 11 et, éventuellement, du contrôleur 24 du point de commande 12.

De cette manière, l'appairage enregistré permet de commander l'actionneur électromécanique 11 à partir du point de commande 12 dans le mode de commande.

Dans un exemple de réalisation, préalablement à l'étape E8 de création ou de suppression de l'appairage et, préférentiellement, préalablement à la première étape E1 d'activation, le procédé comprend une étape E17 d'apprentissage d'un identifiant du point de commande 12 par l'unité électronique de contrôle 15 de l'actionneur électromécanique 11.

Ainsi, l'identifiant du point de commande 12 appris par l'unité électronique de contrôle 15, en particulier enregistré dans une mémoire de l'unité électronique de contrôle 15, permet de reconnaître la trame émise par le point de commande 12, lors de l'étape E8 de création ou de suppression de l'appairage, de sorte à autoriser la création ou la suppression de l'appairage.

L'étape E17 d'apprentissage peut être mise en œuvre, notamment, par une lecture d'un code barre associé au point de commande 12 au moyen d'un outil de configuration, non représenté, puis par une transmission de l'identifiant du point de commande 12 à partir de l'outil de configuration vers l'unité électronique de contrôle 15 de l'actionneur électromécanique 11. La transmission de l'identifiant du point de commande 12 à partir de l'outil de configuration vers l'unité électronique de contrôle 15 de l'actionneur électromécanique 11 peut être mise en œuvre par une communication sans fil ou par une communication filaire.

Suite à l'étape E8 de création ou de suppression de l'appairage du point de commande 12 avec l'actionneur électromécanique 11 et, en particulier, suite à l'étape E16 de mémorisation, le procédé met en œuvre l'étape E15 d'entrée dans le mode de commande.

Suite à l'étape E8 de création ou de suppression de l'appairage du point de commande 12 avec l'actionneur électromécanique 11, le procédé comprend une étape E18 d'arrêt du moteur électrique 16 de l'actionneur électromécanique 11, de sorte à garantir la sécurité de l'installation domotique.

Ici, l'étape E18 d'arrêt du moteur électrique 16 de l'actionneur électromécanique 11 est mise en œuvre par l'unité électronique de contrôle 15 de l'actionneur électromécanique 11.

L'étape E18 d'arrêt du moteur électrique 16 de l'actionneur électromécanique 11 peut être mise en œuvre après l'étape E16 de mémorisation ou en parallèle de celle-ci.

Dans le cas où la deuxième période de temps T2 d'activation de l'unique élément d'activation 14 du point de commande 12 est supérieure ou égale à la troisième valeur seuil S3 et inférieure à une quatrième valeur seuil S4, le procédé comprend une étape E12 d'émission d'un ordre de commande de réveil de l'unité électronique de contrôle 15 de l'actionneur électromécanique 11.

Ainsi, le réveil de l'unité électronique de contrôle 15 de l'actionneur électromécanique 11, suite à l'étape E12, permet de pouvoir créer un appairage entre un autre point de commande et l'actionneur électromécanique 11.

A titre d'exemple nullement limitatif, la quatrième valeur seuil S4 est de l'ordre de dix secondes.

En pratique, l'étape E12 d'émission d'un ordre de commande de réveil est mise en œuvre par l'émission d'une trame à partir du point de commande 12, en particulier du module d'émission d'ordres de commande 25, vers l'unité électronique de contrôle 15 de l'actionneur électromécanique 11, en particulier le module de réception d'ordres 27 de l'unité électronique de contrôle 15.

Suite à l'étape E12 d'émission d'un ordre de commande de réveil, le procédé met en œuvre l'étape E15 d'entrée dans le mode de commande du point de commande 12.

Suite à l'étape E12 d'émission d'un ordre de commande de réveil, le procédé comprend l'étape E18 d'arrêt du moteur électrique 16 de l'actionneur électromécanique 11, de sorte à garantir la sécurité de l'installation domotique.

L'étape E18 d'arrêt du moteur électrique 16 de l'actionneur électromécanique 11 peut être mise en œuvre avant l'étape E15 d'entrée dans le mode de commande ou en parallèle de celle-ci.

Ici, l'étape E18 d'arrêt du moteur électrique 16 de l'actionneur électromécanique 11 est mise en œuvre par l'unité électronique de contrôle 15 de l'actionneur électromécanique 11.

Lors de l'activation de l'élément d'activation 14 du point de commande 12, à la deuxième étape E6 d'activation, le point de commande 12 n'émet pas un ordre de commande à l'actionneur électromécanique 11 pour un déplacement de l'écran 2.

Suite à la deuxième étape E6 d'activation, le procédé comprend une deuxième étape E7 de relâchement de l'unique élément d'activation 14 du point de commande 12.

Suite à la deuxième étape E7 de relâchement et, préférentiellement, suite à l'étape E8 de création ou de suppression de l'appairage ou suite à l'étape E12 d'émission d'un ordre de commande de réveil, le procédé met en œuvre l'étape E15 d'entrée dans le mode de commande du point de commande 12.

En pratique, l'étape E15 d'entrée dans le mode de commande est mise en œuvre par la sortie du mode de configuration et le basculement entre le mode de configuration et le mode de commande.

Par ailleurs, dans le cas où la deuxième période de temps T2 d'activation de l'unique élément d'activation 14 du point de commande 12 est supérieure ou égale à la quatrième valeur seuil S4, le procédé met également en œuvre l'étape E15 d'entrée dans le mode de commande.

Ainsi, l'absence de détection d'un signal de relâchement de l'élément d'activation 14 du point de commande 12 provoque le basculement du mode de configuration au mode de commande.

Suite à l'entrée dans le mode de commande, l'écran 2 peut être déplacé au moyen de l'actionneur électromécanique 11 par un appui sur l'élément d'activation 14 du point de commande 12.

Avantageusement, suite à l'étape E4 d'entrée dans le mode de configuration et dans le cas où la deuxième étape E6 d'activation de l'unique élément d'activation 14 du point de commande 12 est non détectée par le contrôleur 24 du point de commande 12, pendant une troisième période de temps T3 supérieure ou égale à une cinquième valeur seuil S5, le procédé met en œuvre l'étape E15 d'entrée dans le mode de commande.

Ainsi, l'absence de détection d'un signal d'activation de l'élément d'activation 14 du point de commande 12 provoque le basculement du mode de configuration au mode de commande.

De cette manière, l'absence de détection d'un signal d'activation de l'élément d'activation 14 du point de commande 12 est pris en considération comme une absence de la création ou de la suppression de l'appairage du point de commande 12 avec l'actionneur électromécanique 11.

A titre d'exemple nullement limitatif, la cinquième valeur seuil S5 est de l'ordre d'une minute.

Suite à l'entrée dans le mode de commande, l'écran 2 peut être déplacé au moyen de l'actionneur électromécanique 11 par un appui sur l'élément d'activation 14 du point de commande 12.

La troisième période de temps T3 démarre à partir de l'instant de l'entrée dans le mode de configuration.

Ici, la troisième période de temps T3 est déterminée par le contrôleur 24 du point de commande 12 et, en particulier, par un microcontrôleur du contrôleur 24 comprenant une horloge.

Avantageusement, suite à la première étape E1 d'activation de l'unique élément d'activation 14 du point de commande 12 et dans le cas où la première période de temps T1 est supérieure ou égale à la première valeur seuil S1, le procédé comprend une étape E9 de signalement d'un basculement du mode de commande au mode de configuration.

Ainsi, l'utilisateur est informé de l'entrée dans le mode de configuration.

En pratique, l'étape E9 de signalement est mise en œuvre par une mise en fonctionnement de l'élément d'affichage 26 du point de commande 12, en particulier d'une source lumineuse.

Ici, la source lumineuse est une diode électroluminescente.

Le type et le nombre d'éléments d'affichage du point de commande ne sont pas limitatifs et peuvent être différents. En particulier, l'élément d'affichage peut comprend une pluralité de diodes électroluminescentes ou peut être un afficheur à sept segments, un afficheur LCD (acronyme du terme anglo-saxon « Liquid Crystal Display ») ou TFT (acronyme du terme anglo-saxon « Thin Film Transistor »).

Dans l'exemple de réalisation, la source lumineuse est disposée à l'intérieur du boîtier 29 du point de commande 12.

Avantageusement, l'élément d'affichage 26 du point de commande 12 est contrôlé par le contrôleur 24 du point de commande 12.

Ici et comme illustré à la figure 4, l'étape E9 de signalement est mise en œuvre après l'étape E2 d'émission d'un ordre de commande.

Par ailleurs, l'étape E9 de signalement peut être mise en œuvre avant, après ou en parallèle de la première étape E3 de relâchement.

Avantageusement, le procédé comprend une étape E10 d'arrêt de signalement d'un basculement du mode de commande au mode de configuration, dès que la première période de temps T1 d'activation de l'unique élément d'activation 14 du point de commande 12, à la première étape E1 d'activation, est supérieure ou égale à la deuxième valeur seuil S2.

Ainsi, dans le cas où la première période de temps T1 d'activation de l'élément d'activation 14 du point de commande 12, à la première étape E1 d'activation, est supérieure ou égale à la deuxième valeur seuil S2, l'élément d'affichage 26 du point de commande 12 est éteint, puisque le procédé met en œuvre l'étape E5 de maintien dans le mode de commande.

L'étape E10 d'arrêt de signalement peut être mise en œuvre en parallèle, avant ou après l'étape E5 de maintien dans le mode de commande. De même, l'étape E10 d'arrêt de signalement peut être mise en œuvre en parallèle, avant ou après l'étape E11 d'arrêt de l'émission d'un ordre de commande.

Préférentiellement, l'étape de signalement E9 est maintenue active tant que le point de commande 12 est dans le mode de configuration.

Avantageusement, le procédé comprend une étape E13 d'arrêt de signalement du mode de configuration, dès que la troisième période de temps T3 est supérieure ou égale à la cinquième valeur seuil S5.

Ainsi, dans le cas où la troisième période de temps T3 est supérieure ou égale à la cinquième valeur seuil S5, l'élément d'affichage 26 du point de commande 12 est éteint, puisque le procédé met en œuvre l'étape E15 d'entrée dans le mode de commande.

L'étape E13 d'arrêt de signalement peut être mise en œuvre en parallèle, avant ou après l'étape E15 d'entrée dans le mode de commande.

Le point de commande 12 comporte des éléments de commande, notamment le contrôleur 24, constitués par au moins une carte électronique (non représentée). Cette carte électronique du contrôleur 24 est configurée pour mettre en fonctionnement l'installation domotique conforme à l'invention. Ainsi, le contrôleur 24 du point de commande 12 détecte les appuis sur l'élément d'activation 14 du point de commande 12, de sorte à commander l'actionneur électromécanique 11 et à basculer entre le mode de commande et le mode de configuration, comme décrit précédemment.

La suppression de l'appairage du point de commande 12 avec l'actionneur 11 est mise en œuvre, au moyen de l'étape E8, suite à la création de celui-ci, également au moyen de l'étape E8, en réitérant le procédé de commande.

En pratique, un support d'enregistrement de données, lisible par un calculateur, est intégré à l'installation domotique et sert au stockage d'un programme informatique comprenant des codes de mise en œuvre des étapes E1 à E18 du procédé de commande mentionnées ci-dessus. L'invention concerne également ce support d'enregistrement de données et ce programme informatique.

Grâce à la présente invention, l'entrée dans le mode de configuration du point de commande est mise en œuvre par un seul appui sur l'unique élément d'activation maintenu pendant la première période de temps qui est comprise entre la première valeur seuil et la deuxième valeur seuil. Puis, la création ou la suppression de l'appairage du point de commande avec l'actionneur est mise en œuvre par un seul appui sur l'unique élément d'activation maintenu pendant la deuxième période de temps qui est inférieure à la troisième valeur seuil.

De cette manière, le point de commande comprend un unique élément d'activation permettant de basculer entre le mode de commande et le mode de configuration, ainsi que de créer ou de supprimer l'appairage entre le point de commande et l'actionneur, de sorte à limiter l'encombrement du point de commande et à minimiser les coûts d'obtention du point de commande.

De nombreuses modifications peuvent être apportées aux exemples de réalisation décrits précédemment sans sortir du cadre de l'invention défini, en particulier, par les revendications.

En particulier, l'actionneur peut être un dispositif d'éclairage comprenant une ou plusieurs sources lumineuses.

En outre, les modes de réalisation et variantes envisagés peuvent être combinés pour générer de nouveaux modes de réalisation de l'invention, sans sortir du cadre de l'invention défini, en particulier, par les revendications.

## Revendications

1. Procédé de commande en fonctionnement d'une installation domotique,
- ladite installation domotique comprenant au moins :
∘ un dispositif d'occultation (3), le dispositif d'occultation (3) comprenant un écran (2),
∘ un actionneur (11), l'actionneur comprenant (11) une unité électronique de contrôle (15),
∘ un point de commande (12), le point de commande (12) comprenant un contrôleur (24) et un module d'émission d'ordres de commande (25),
▪ l'actionneur (11) étant commandé par le point de commande (12) au moyen d'une communication sans fil,
- le point de commande (12) comprenant au moins un mode de commande et un mode de configuration,
- le point de commande (12) comprenant un unique élément d'activation (14), **caractérisé en ce que** le procédé comprend au moins les étapes suivantes, à partir du mode de commande :
- une première étape (E1) d'activation de l'unique élément d'activation (14) du point de commande (12) pendant une première période de temps (T1), engendrant un déplacement de l'écran (2),
- suite à la première étape (E1) d'activation,
∘ une étape (E2) d'émission d'un ordre de commande à partir du point de commande (12) vers l'actionneur (11), puis
∘ une première étape (E3) de relâchement de l'unique élément d'activation (14) du point de commande (12),
**en ce que** le procédé comprend en outre les étapes suivantes en fonction de la première période de temps (T1) d'activation de l'unique élément d'activation (14) du point de commande (12), à la première étape (E1) d'activation :
- suite à la première étape (E3) de relâchement et dans le cas où la première période de temps (T1) d'activation de l'unique élément d'activation (14) du point de commande (12) est supérieure ou égale à une première valeur seuil (S1) et inférieure à une deuxième valeur seuil (S2), la deuxième valeur seuil (S2) étant supérieure à la première valeur seuil (S1), une étape (E4) d'entrée dans le mode de configuration, et
- dans le cas où la première période de temps (T1) d'activation de l'unique élément d'activation (14) du point de commande (12) est supérieure ou égale à la deuxième valeur seuil (S2), une étape (E5) de maintien dans le mode de commande et une étape (E11) d'arrêt de l'émission d'un ordre de commande à partir du point de commande (12) vers l'actionneur (11), et **en ce que** le procédé comprend en outre les étapes suivantes :
- suite à l'étape (E4) d'entrée dans le mode de configuration, une deuxième étape (E6) d'activation de l'unique élément d'activation (14) du point de commande (12) pendant une deuxième période de temps (T2),
- dans le cas où la deuxième période de temps (T2) d'activation de l'unique élément d'activation (14) du point de commande (12) est inférieure à une troisième valeur seuil (S3), une étape (E8) de création ou de suppression d'un appairage du point de commande (12) avec l'actionneur (11),
- dans le cas où la deuxième période de temps (T2) d'activation de l'unique élément d'activation (14) du point de commande (12) est supérieure à une quatrième valeur seuil (S4), le procédé comprend une étape (E15) d'entrée dans le mode de commande.

2. Procédé de commande en fonctionnement d'une installation domotique selon la revendication 1, **caractérisé en ce que**, suite à la première étape (E1) d'activation de l'unique élément d'activation (14) du point de commande (12) et dans le cas où la première période de temps (T1) est supérieure ou égale à la première valeur seuil (S1), le procédé comprend une étape (E9) de signalement d'un basculement du mode de commande au mode de configuration.

3. Procédé de commande en fonctionnement d'une installation domotique selon la revendication 2, **caractérisé en ce que** le procédé comprend une étape (E10) d'arrêt de signalement d'un basculement du mode de commande au mode de configuration, dès que la première période de temps (T1) d'activation de l'unique élément d'activation (14) du point de commande (12), à la première étape (E1) d'activation, est supérieure ou égale à la deuxième valeur seuil (S2).

4. Procédé de commande en fonctionnement d'une installation domotique selon la revendication 2, **caractérisé en ce que** l'étape de signalement (E9) est maintenue active tant que le point de commande (12) est dans le mode de configuration.

5. Procédé de commande en fonctionnement d'une installation domotique selon l'une quelconque des revendications 1 à 4, **caractérisé en ce que**, suite à la deuxième étape (E6) d'activation, le procédé comprend une deuxième étape (E7) de relâchement de l'unique élément d'activation (14) du point de commande (12), puis une étape (E15) d'entrée dans le mode de commande.

6. Procédé de commande en fonctionnement d'une installation domotique selon l'une quelconque des revendications 1 à 5, **caractérisé en ce que**, suite à l'étape (E4) d'entrée dans le mode de configuration et dans le cas où la deuxième étape (E6) d'activation de l'unique élément d'activation (14) du point de commande (12) est non détectée par le contrôleur (24) du point de commande (12), pendant une troisième période de temps (T3) supérieure ou égale à une cinquième valeur seuil (S5), le procédé comprend une étape (E15) d'entrée dans le mode de commande.

7. Procédé de commande en fonctionnement d'une installation domotique selon la revendication 2 et selon la revendication 6, **caractérisé en ce que** le procédé comprend une étape (E13) d'arrêt de signalement du mode de configuration, dès que la troisième période de temps (T3) est supérieure ou égale à la cinquième valeur seuil (S5).

8. Procédé de commande en fonctionnement d'une installation domotique selon l'une quelconque des revendications 1 à 7, **caractérisé en ce que** le procédé comprend une étape (E14) d'insertion d'une pile dans un logement d'un boîtier du point de commande (12), puis une étape (E15) d'entrée dans le mode de commande.

9. Installation domotique comprenant au moins :
∘ un actionneur (11), l'actionneur comprenant (11) une unité électronique de contrôle (15),
∘ un point de commande (12), le point de commande (12) comprenant un unique élément d'activation (14), un contrôleur (24) et un module d'émission d'ordres de commande (25),
▪ l'actionneur (11) étant commandé par le point de commande (12) au moyen d'une communication sans fil,
**caractérisée en ce que** le contrôleur (24) du point de commande (12) est configuré pour mettre en œuvre le procédé selon l'une quelconque des revendications 1 à 8 ou **en ce que** le contrôleur (24) du point de commande (12) comprend des moyens pour mettre en œuvre le procédé selon l'une quelconque des revendications 1 à 8, notamment des étapes du procédé selon l'une quelconque des revendications 1 à 8.

10. Produit programme comprenant des instructions qui, lorsque le programme est exécuté par un ordinateur, conduisent celui-ci à mettre en œuvre le procédé selon l'une quelconque des revendications 1 à 8, notamment des étapes du procédé selon l'une quelconque des revendications 1 à 8.

11. Support d'enregistrement lisible par ordinateur comprenant des instructions qui, lorsqu'elles sont exécutées par un ordinateur, conduisent celui-ci à mettre en œuvre le procédé selon l'une quelconque des revendications 1 à 8, notamment des étapes du procédé selon l'une quelconque des revendications 1 à 8.

## Patentansprüche

1. Verfahren zur Betriebssteuerung einer Domotik-Anlage,
- wobei die Domotik-Anlage wenigstens umfasst:
∘ eine Verdunkelungsvorrichtung (3), wobei die Verdunkelungsvorrichtung (3) einen Schirm (2) umfasst,
∘ einen Stellantrieb (11), wobei der Stellantrieb (11) eine elektronische Steuereinheit (15) umfasst,
∘ einen Bedienpunkt (12), wobei der Bedienpunkt (12) eine Steuereinrichtung (24) und ein Modul zum Senden von Steuerbefehlen (25) umfasst,
▪ wobei der Stellantrieb (11) durch den Bedienpunkt (12) mittels einer drahtlosen Kommunikation gesteuert wird,
- wobei der Bedienpunkt (12) wenigstens einen Bedienmodus und einen Konfigurationsmodus umfasst,
- wobei der Bedienpunkt (12) ein einziges Aktivierungselement (14) umfasst,
**dadurch gekennzeichnet, dass** das Verfahren wenigstens die folgenden Schritte umfasst, ausgehend vom Bedienmodus:
- einen ersten Schritt (E1) der Aktivierung des einzigen Aktivierungselements (14) des Bedienpunktes (12) während eines ersten Zeitintervalls (T1), die eine Bewegung des Schirmes (2) zur Folge hat,
- im Anschluss an den ersten Schritt (E1) der Aktivierung,
∘ einen Schritt (E2) des Sendens eines Steuerbefehls vom Bedienpunkt (12) aus an den Stellantrieb (11), anschließend
∘ einen ersten Schritt (E3) des Loslassens des einzigen Aktivierungselements (14) des Bedienpunktes (12),
dadurch, dass das Verfahren außerdem die folgenden Schritte umfasst, in Abhängigkeit vom ersten Zeitintervall (T1) der Aktivierung des einzigen Aktivierungselements (14) des Bedienpunktes (12) im ersten Schritt (E1) der Aktivierung:
- im Anschluss an den ersten Schritt (E3) des Loslassens und in dem Fall, wenn das erste Zeitintervall (T1) der Aktivierung des einzigen Aktivierungselements (14) des Bedienpunktes (12) größer oder gleich einem ersten Schwellenwert (S1) und kleiner als ein zweiter Schwellenwert (S2) ist, wobei der zweite Schwellenwert (S2) größer als der erste Schwellenwert (S1) ist, einen Schritt (E4) des Eintritts in den Konfigurationsmodus, und
- in dem Fall, wenn das erste Zeitintervall (T1) der Aktivierung des einzigen Aktivierungselements (14) des Bedienpunktes (12) größer oder gleich dem zweiten Schwellenwert (S2) ist, einen Schritt (E5) des Verbleibens im Bedienmodus und einen Schritt (E11) des Stoppens des Sendens eines Steuerbefehls vom Bedienpunkt (12) aus an den Stellantrieb (11),
und dadurch, dass das Verfahren außerdem die folgenden Schritte umfasst:
- im Anschluss an den Schritt (E4) des Eintritts in den Konfigurationsmodus, einen zweiten Schritt (E6) der Aktivierung des einzigen Aktivierungselements (14) des Bedienpunktes (12) während eines zweiten Zeitintervalls (T2),
- in dem Fall, wenn das zweite Zeitintervall (T2) der Aktivierung des einzigen Aktivierungselements (14) des Bedienpunktes (12) kleiner als ein dritter Schwellenwert (S3) ist, einen Schritt (E8) der Erzeugung oder der Aufhebung einer Paarung des Bedienpunktes (12) mit dem Stellantrieb (11),
- in dem Fall, wenn das zweite Zeitintervall (T2) der Aktivierung des einzigen Aktivierungselements (14) des Bedienpunktes (12) größer als ein vierter Schwellenwert (S4) ist, umfasst das Verfahren einen Schritt (E15) des Eintritts in den Bedienmodus.

2. Verfahren zur Betriebssteuerung einer Domotik-Anlage nach Anspruch 1, **dadurch gekennzeichnet, dass** im Anschluss an den ersten Schritt (E1) der Aktivierung des einzigen Aktivierungselements (14) des Bedienpunktes (12) und in dem Fall, wenn das erste Zeitintervall (T1) größer oder gleich dem ersten Schwellenwert (S1) ist, das Verfahren einen Schritt (E9) der Meldung einer Umschaltung vom Bedienmodus zum Konfigurationsmodus umfasst.

3. Verfahren zur Betriebssteuerung einer Domotik-Anlage nach Anspruch 2, **dadurch gekennzeichnet, dass** das Verfahren einen Schritt (E10) des Stoppens der Meldung einer Umschaltung vom Bedienmodus zum Konfigurationsmodus, sobald das erste Zeitintervall (T1) der Aktivierung des einzigen Aktivierungselements (14) des Bedienpunktes (12) im ersten Schritt (E1) der Aktivierung größer oder gleich dem zweiten Schwellenwert (S2) ist, umfasst.

4. Verfahren zur Betriebssteuerung einer Domotik-Anlage nach Anspruch 2, **dadurch gekennzeichnet, dass** der Schritt der Meldung (E9) aktiv gehalten wird, solange sich der Bedienpunkt (12) im Konfigurationsmodus befindet.

5. Verfahren zur Betriebssteuerung einer Domotik-Anlage nach einem der Ansprüche 1 bis 4, **dadurch gekennzeichnet, dass** im Anschluss an den zweiten Schritt (E6) der Aktivierung das Verfahren einen zweiten Schritt (E7) des Loslassens des einzigen Aktivierungselements (14) des Bedienpunktes (12) und anschließend einen Schritt (E15) des Eintritts in den Bedienmodus umfasst.

6. Verfahren zur Betriebssteuerung einer Domotik-Anlage nach einem der Ansprüche 1 bis 5, **dadurch gekennzeichnet, dass** im Anschluss an den Schritt (E4) des Eintritts in den Konfigurationsmodus und in dem Fall, wenn der zweite Schritt (E6) der Aktivierung des einzigen Aktivierungselements (14) des Bedienpunktes (12) nicht von der Steuereinrichtung (24) des Bedienpunktes (12) während eines dritten Zeitintervalls (T3), das größer oder gleich einem fünften Schwellenwert (S5) ist, erkannt wird, das Verfahren einen Schritt (E15) des Eintritts in den Bedienmodus umfasst.

7. Verfahren zur Betriebssteuerung einer Domotik-Anlage nach Anspruch 2 und nach Anspruch 6, **dadurch gekennzeichnet, dass** das Verfahren einen Schritt (E13) des Stoppens der Meldung des Konfigurationsmodus, sobald das dritte Zeitintervall (T3) größer oder gleich dem fünften Schwellenwert (S5) ist, umfasst.

8. Verfahren zur Betriebssteuerung einer Domotik-Anlage nach einem der Ansprüche 1 bis 7, **dadurch gekennzeichnet, dass** das Verfahren einen Schritt (E14) des Einsetzens einer Batterie in eine Aufnahme eines Gehäuses des Bedienpunktes (12) und anschließend einen Schritt (E15) des Eintritts in den Bedienmodus umfasst.

9. Domotik-Anlage, welche wenigstens umfasst:
∘ einen Stellantrieb (11), wobei der Stellantrieb (11) eine elektronische Steuereinheit (15) umfasst,
∘ einen Bedienpunkt (12), wobei der Bedienpunkt (12) ein einziges Aktivierungselement (14), eine Steuereinrichtung (24) und ein Modul zum Senden von Steuerbefehlen (25) umfasst,
▪ wobei der Stellantrieb (11) durch den Bedienpunkt (12) mittels einer drahtlosen Kommunikation gesteuert wird,
**dadurch gekennzeichnet, dass** die Steuereinrichtung (24) des Bedienpunktes (12) dafür ausgelegt ist, das Verfahren nach einem der Ansprüche 1 bis 8 durchzuführen, oder dadurch, dass die Steuereinrichtung (24) des Bedienpunktes (12) Mittel zur Durchführung des Verfahrens nach einem der Ansprüche 1 bis 8, insbesondere der Schritte des Verfahrens nach einem der Ansprüche 1 bis 8 umfasst.

10. Programmprodukt, welches Anweisungen umfasst, die, wenn das Programm von einem Computer ausgeführt wird, bewirken, dass dieser das Verfahren nach einem der Ansprüche 1 bis 8, insbesondere die Schritte des Verfahrens nach einem der Ansprüche 1 bis 8 durchführt.

11. Computerlesbares Aufzeichnungsmedium, welches Anweisungen umfasst, die, wenn sie von einem Computer ausgeführt werden, bewirken, dass dieser das Verfahren nach einem der Ansprüche 1 bis 8, insbesondere die Schritte des Verfahrens nach einem der Ansprüche 1 bis 8 durchführt.

## Claims

1. Method for controlling in operation a home-automation apparatus,
- said home-automation apparatus comprising at least:
∘ an occulting device (3), the occulting device (3) comprising a screen (2),
∘ an actuator (11), the actuator (11) comprising an electronic control unit (15),
∘ a control point (12), the control point (12) comprising a controller (24) and a module (25) for sending control orders,
▪ the actuator (11) being controlled by the control point (12) by means of a wireless communication,
- the control point (12) comprising at least a control mode and a configuration mode,
- the control point (12) comprising a single activation element (14),
**characterized in that** the method comprises at least the following steps, in the control mode:
- a first step (E1) of activating the single activation element (14) of the control point (12) during a first time period (T1), engendering a movement of the screen (2),
- following the first activating step (E1),
∘ a step (E2) of sending a control order from the control point (12) to the actuator (11), then
∘ a first step (E3) of releasing the single activation element (14) of the control point (12),
**in that** the method furthermore comprises the following steps depending on the first time period (T1) of activation of the single activation element (14) of the control point (12), in the first activating step (E1):
- following the first releasing step (E3) and in the case where the first time period (T1) of activation of the single activation element (14) of the control point (12) is longer than or equal to a first threshold value (S1) and shorter than a second threshold value (S2), the second threshold value (S2) being higher than the first threshold value (S1), a step (E4) of entering into the configuration mode, and
- in the case where the first time period (T1) of activation of the single activation element (14) of the control point (12) is longer than or equal to the second threshold value (S2), a step (E5) of remaining in control mode and a step (E11) of stopping sending a control order from the control point (12) to the actuator (11),
and **in that** the method furthermore comprises the following steps:
- following the step (E4) of entering into the configuration mode, a second step (E6) of activating the single activation element (14) of the control point (12) during a second time period (T2),
- in the case where the second time period (T2) of activation of the single activation element (14) of the control point (12) is shorter than a third threshold value (S3), a step (E8) of creating or eliminating pairing of the control point (12) with the actuator (11),
- in the case where the second time period (T2) of activation of the single activation element (14) of the control point (12) is longer than a fourth threshold value (S4), the method comprises a step (E15) of entering into the control mode.

2. Method for controlling in operation a home-automation apparatus according to Claim 1, **characterized in that**, following the first step (E1) of activating the single activation element (14) of the control point (12) and in the case where the first time period (T1) is longer than or equal to the first threshold value (S1), the method comprises a step (E9) of flagging a switch from control mode to configuration mode.

3. Method for controlling in operation a home-automation apparatus according to Claim 2, **characterized in that** the method comprises a step (E10) of stopping flagging a switch from control mode to configuration mode, once the first time period (T1) of activation of the single activation element (14) of the control point (12), in the first activating step (E1), exceeds or equals the second threshold value (S2).

4. Method for controlling in operation a home-automation apparatus according to Claim 2, **characterized in that** the flagging step (E9) is kept active provided that the control point (12) is in the configuration mode.

5. Method for controlling in operation a home-automation apparatus according to any one of Claims 1 to 4, **characterized in that**, following the second activating step (E6), the method comprises a second step (E7) of releasing the single activation element (14) of the control point (12), then a step (E15) of entering into the control mode.

6. Method for controlling in operation a home-automation apparatus according to any one of Claims 1 to 5, **characterized in that**, following the step (E4) of entering into the configuration mode and in the case where the second step (E6) of activating the single activation element (14) of the control point (12) is not detected by the controller (24) of the control point (12), during a third time period (T3) longer than or equal to a fifth threshold value (S5), the method comprises a step (E15) of entering into the control mode.

7. Method for controlling in operation a home-automation apparatus according to Claim 2 and according to Claim 6, **characterized in that** the method comprises a step (E13) of stopping flagging the configuration mode, once the third time period (T3) exceeds or equals the fifth threshold value (S5).

8. Method for controlling in operation a home-automation apparatus according to any one of Claims 1 to 7, **characterized in that** the method comprises a step (E14) of inserting a battery into a housing of a casing of the control point (12), then a step (E15) of entering into the control mode.

9. Home-automation apparatus comprising at least:
∘ an actuator (11), the actuator (11) comprising an electronic control unit (15),
∘ a control point (12), the control point (12) comprising a single activation element (14), a controller (24) and a module (25) for sending control orders,
▪ the actuator (11) being controlled by the control point (12) by means of a wireless communication,
**characterized in that** the controller (24) of the control point (12) is configured to implement the method according to any one of Claims 1 to 8 or **in that** the controller (24) of the control point (12) comprises means for implementing the method according to any one of Claims 1 to 8, and in particular steps of the method according to any one of Claims 1 to 8.

10. Program product containing instructions that, when the program is executed by a computer, lead the latter to implement the method according to any one of Claims 1 to 8, and in particular steps of the method according to any one of Claims 1 to 8.

11. Computer-readable storage medium containing instructions that, when they are executed by a computer, lead the latter to implement the method according to any one of Claims 1 to 8, and in particular steps of the method according to any one of Claims 1 to 8.
